Europäisches Patentamt

European Patent Office

Office européen des brevets

(11) Veröffentlichungsnummer: **0 109 669**
**A1**

(12) **EUROPÄISCHE PATENTANMELDUNG**

(21) Anmeldenummer: 83111529.0

(22) Anmeldetag: 18.11.83

(51) Int. Cl.³: **F 16 K 31/06**
**F 15 B 13/044**

(30) Priorität: 22.11.82 US 443361

(43) Veröffentlichungstag der Anmeldung:
30.05.84 Patentblatt 84/22

(84) Benannte Vertragsstaaten:
DE FR GB

(71) Anmelder: ITT INDUSTRIES INC.
320 Park Avenue
New York, NY 10022(US)

(84) Benannte Vertragsstaaten:
FR GB

(71) Anmelder: Deutsche ITT Industries GmbH
Hans-Bunte-Strasse 19 Postfach 840
D-7800 Freiburg(DE)

(84) Benannte Vertragsstaaten:
DE

(72) Erfinder: Kebede, Berhanu
229 West Regent Street
Inglewood California 91301(US)

(72) Erfinder: George, Marion Lewis
18413 Blackhawk Street
Northridge California 91326(US)

(74) Vertreter: Thul, Leo, Dipl.-Phys. et al,
Kurze Strasse 8 Postfach 300 929
D-7000 Stuttgart 30(DE)

(54) **Modulierendes Regelventil.**

(57) Eine Prallplatten-Ventilkegel-Anordnung wird beschrieben, die sich von einer Prallplatten-Düsen-Anordnung dadurch unterscheidet, daß die Prallplatten-Düsen-Anordnung in zwei Stufen wirkt und einen Verstärker verwendet, der einen unverstärkten Druck wirksam werden läßt. Obgleich beide Anordnungen, die Prallplatten-Ventilkegel-Anordnung und die Prallplatten-Düsen-Anordnung, durch einen konventionellen Momenten-Motor gesteuert werden, wirkt die Prallplatten-Ventikegel-Anordnung nur mit einer Stufe, die mit hohem Versorgungsdruck arbeitet.

Diese Stufe besteht aus einer electromagnetisch Steuerbaren, um die Achse (16) schwenkbaren, Prallplatte (15) die an dem Kopf (45) eines Ventilkegels (17) angreift, um den Schaft (44) hin und her zu bewegen und dadurch einen Durchfluß zwischen dem Durchgang (27) und dem Auslaß (38) zu regeln.

FIG. 2

EP 0 109 669 A1

1

B.Kebede 1-1

### Modulierendes Regelventil

Die Erfindung betrifft die Regelung von Stellantrieben, insbesondere ein modulierendes Regelventil für einen elektrohydraulischen, linear oder drehend bewegten Stellantrieb oder ähnliches.

Durch den Stand der Technik ist bekannt, daß die Öffnung eines Ventils ortsfest gehalten werden kann, gesteuert sein kann, oder durch den Druck am Auslaß eines modulierenden Regelventils geregelt werden kann. Ein Beispiel dafür ist der Gegenstand nach dem US-Patent 3 620 185 (Keller).

Es ist auch bekannt, durch die Verwendung eines elektromagnetischen Stellantriebes eine Prallplatte zu bewegen. In diesem Fall moduliert eine Düse das Volumen und/oder den Druck einer Flüssigkeit am Düsenausgang, um die Prallplatte öffnen oder schließen zu können.

Die bekannten elektromagnetischen Stellantriebe erfordern eine große Anzahl von Einzelteilen. Diese Teile sorgen für

eine ununterbrochen modulierende Regelung am Ausgang des Stellgliedes in Abhängigkeit von einem Regel-Signal-Eingang.

Bei den bekannten elektrohydraulischen Stellantrieben ist es schwierig, eine gute Abdichtung bei hohem Druck, hohem Fluß und scharfer Unterbrechung der Flüssigkeit zu erreichen. Dadurch wurde ein hydraulischer Verstärker notwendig.

Andere US-Patente, die sich mit dem Thema befassen, sind die US-Patente

                          3 087 470
                        - 3 353 353
                        · 3 375 659
                          3 393 508
                          3 407 708
                          3 492 921
                          3 503 303
                          3 516 332
                          3 656 592
                          3 675 538.

Es ist deshalb die Aufgabe der Erfindung, ein modulierendes Regelventil für einen elektrohydraulischen, linear oder sich drehend bewegten Stellantrieb zu schaffen, das gut abdichtet und mit hohem Flüssigkeitsdruck arbeitet, so daß eine Stufe zum Verstärken des Druckes nicht mehr benötigt wird, und das mit weniger Einzelteilen zu realisieren ist.

Diese Aufgabe wird durch die im Anspruch 1 angeführten Maßnahmen gelöst.

Dadurch ergibt sich der Vorteil, daß nur wenige Einzelteile erforderlich sind, eine gute Abdichtung zu erreichen
ist, ein hoher Flüssigkeitsdruck bei einer hohem Strömungsmenge erhalten werden kann und eine shharfe Unterbrechung der Flüssigkeit ebenfalls möglich ist.

Vorteilhafte Weiterbildungen des Gegenstandes nach der Erfindung sind in den Unteransprüchen enthalten.

Die Erfindung wird anhand eines Beispiels in den Zeichnungen dargestellt und beschrieben. In den Zeichnungen zeigt:

Fig. 1    einen Momenten-Motor nach der vorliegenden Erfindung, in Draufsicht,

Fig. 2    einen Schnitt durch den Momenten-Motor nach den
          Linien 2-2 in Fig. 1,

Fig. 3    eine auseinandergenommene perspektivische Darstel-
          lung eines Teiles des in Fig. 2 gezeigten Aufbaues,

Fig. 4    einen senkrechten Schnitt durch einen Momenten-
          Motor mit Prallplatte und Düse nach dem Stand der
          Technik

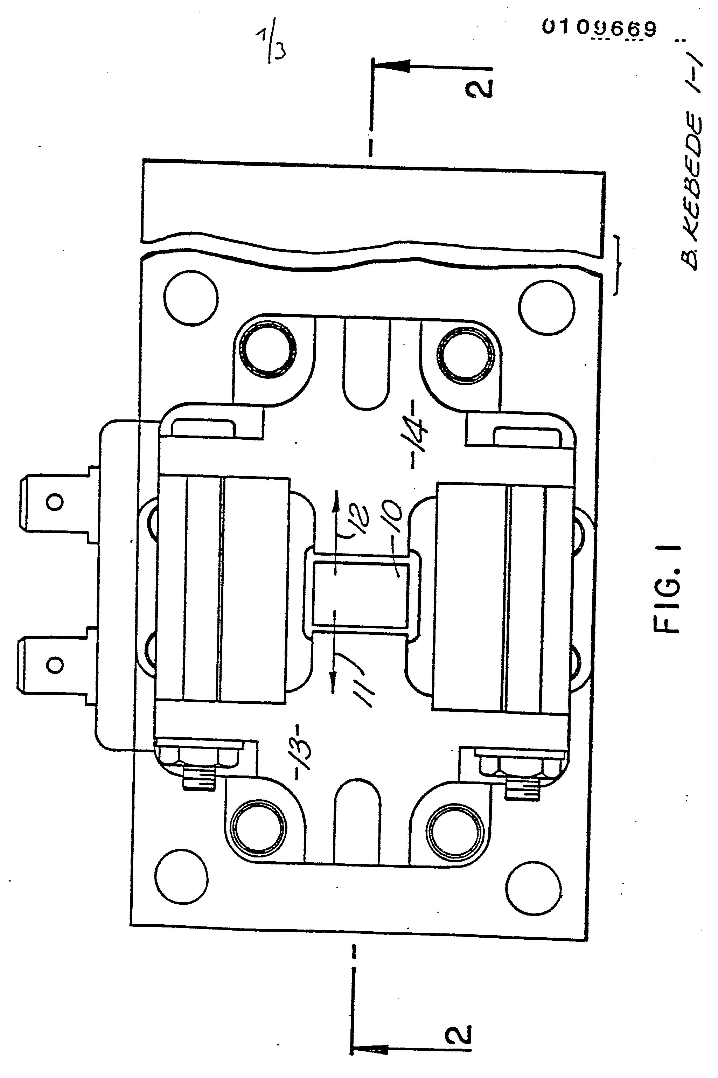

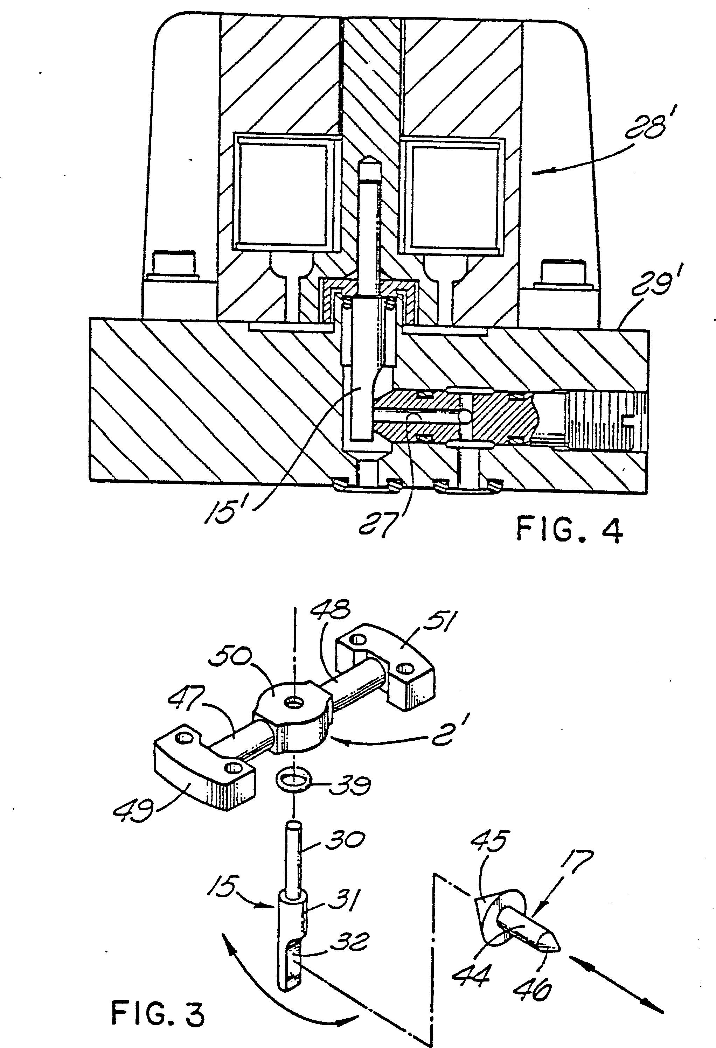

In Fig. 1 ist ein Momenten-Motor in Draufsicht zu sehen.
In Fig. 1 ist ein Anker 10 dargestellt, der entweder in
die Richtung des Pfeiles 11 oder in die Richtung des Pfeiles 12 bewegt wird. Mit 13 und 14 sind elektromagnetische
Pole bezeichnet. Der Momenten-Motor ist bis auf die in
Fig. 3 dargestellten Teile handelsüblich.

Aus dem US-Patent 3 620 185 und der Fig. 4 der vorliegen-

4

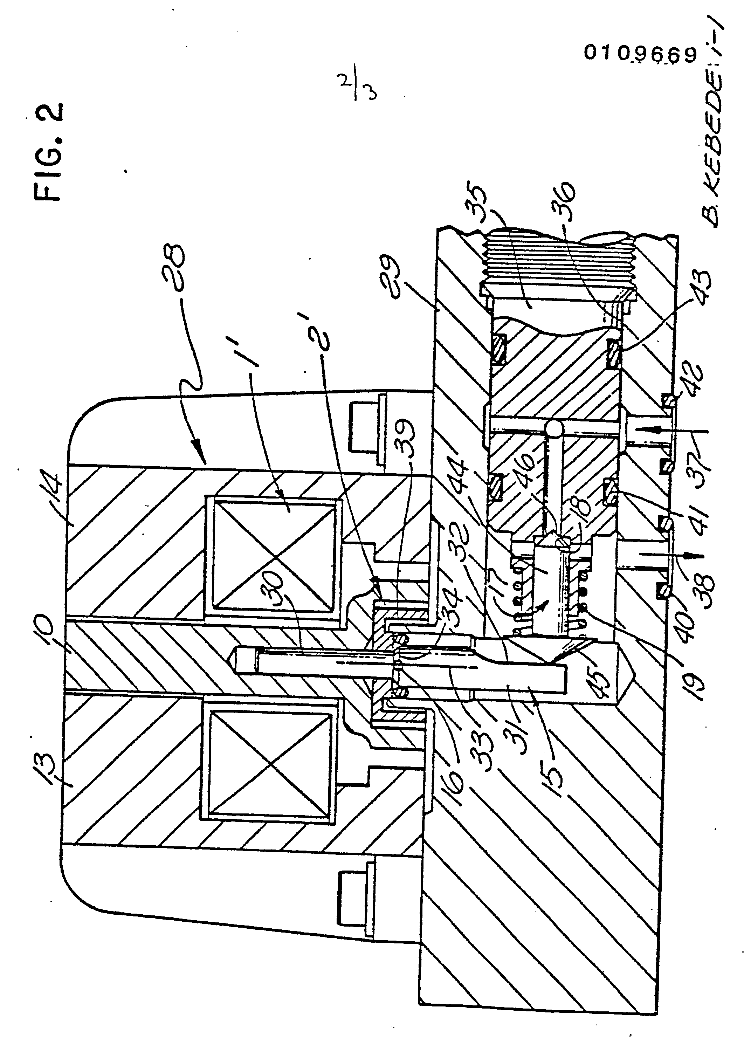

den Zeichnung kann man entnehmen, daß die Ausflußöffnung 38 an der linken Seite des Durchganges 27 anders ausgebildet ist und die Prallplatte 15 nicht die Flügelprallplatte 26 nach dem US-Patent 3 620 185 ist. Statt dessen arbeitet die Prallplatte 15 (Fig. 2) mit einem Ventilkegel 17 zusammen, der an der Stelle 18 des Durchganges 27 einen Sitz aufweist.

Die Vorteile nach der vorliegenden Erfindung bestehen teilweise dadurch, daß der Verstärker 21, der bei dem Gegenstand nach der US-PS 3 620 185 notwendig ist, weggelassen werden kann, außerdem arbeitet jetzt der Gegenstand nach der Erfindung bei hohem Druck, hoher Strömungsmenge und mit scharfer Unterbrechung der Flüssigkeit. Die Druckminderung durch den Verstärker 21 nach dem US-Patent 3 620 185 wird nicht mehr benötigt, da eine gute Abdichtung durch den in Fig. 2 dargestellten Ventilkegel 17 erreicht wird.

Die Prallplatte 15 dreht sich um eine Achse 16 (Fig. 2), die senkrecht zur Zeichnungsebene verläuft.

Es ist abhängig von dem Flüssigkeitsdruck, wenn in einer Ausführung die gewundene Feder 19 weggelassen werden kann.

In Fig. 2 ist eine elektromagnetische Betätigungsanordnung 28 an einer Grundplatte 29 befestigt. Die Betätigungsanordnung 28 ist auf ein Stützglied 2' ausgerichtet, das relativ zu beiden, der Prallplatte 15 und der Grundplatte 29, befestigt ist.

Eine Spule ist mit 1' bezeichnet. Ein Anker 10 ist an der Prallplatte 15 befestigt. Die Prallplatte 15 besteht aus

einem Teil 30 mit einem kleineren zylindrischen Durchmesser und einem größeren zylindrischen Teil 31 mit einer Abflachung 32. Die Linien 33 und 34 sind konstruktive Hilfslinien, um die Stelle zu definieren, an der die Achse 16 angeordnet ist.

Das Teil 35 ist relativ zu der Bohrung 36 innerhalb dieser befestigt.

Der Einlaß 37 und der Auslaß 38 sind mit Richtungspfeilen bezeichnet.

In Fig. 3 wird darauf hingewiesen, daß die Betätigungsanordnung 28' in Fig. 4 oberhalb der Grundplatte 28' identisch mit der Betätigungsanordnung 28 in Fig. 2 ist und die Prallplatte 15' in Fig. 4 ist identisch mit der Prallplatte 15 in Fig. 2.

Der Momenten-Motor einschließlich der Betätigungsanordnung 28' kann irgendeiner der verschiedenen handelsüblich erhältlichen Momenten-Motoren sein, einschließlich des Typs, der durch die MOOG INC. CONTROLS DIVISION, NEW YORK, N.Y. 14052, USA, hergestellt und vertrieben wird.

Der Ventilkegel 17 kann, wenn gewünscht, aus rostfreien Stahl hergestellt sein. O-Ringe 39, 40, 41, 42 und 43 sind in Fig. 2 an den betreffenden Stellen vorgesehen.

Aus Fig. 2 geht weiter hervor, daß der Ventilkegel 17 einen Schaft 44 aufweist, der auf der einen Seite in einen konischen Kopf 45 und auf der anderen Seite in ein konisches Ventil 46 ausläuft.

6

Das Stützglied 2' (Fig. 3) weist verdrehbare Stangen 47 und 48 auf, die mit den Teilen 49, 50 und 51 ein Teil bilden.

Das Teil 30 in Fig. 2 ist beispielsweise durch Expoxydharz oder anderweitig mit dem Anker 10 verbunden.

Der Kopf 45 kann alternativ entweder kugelförmig oder kugelsegmentförmig ausgebildet sein.

B.Kebede-M.George 1-1

Patentansprüche

1. Modulierendes Regelventil, das aus einem Körper, einem ersten und einem zweiten Ein- bzw. Auslaß, die sich in den Körper erstrecken, und einen Durchgang, der innerhalb des Körpers angeordnet ist, besteht, wobei das eine Ende des Durchgangs mit dem Einlaß verbunden ist, d a d u r c h   g e k e n n z e i c h n e t, daß am anderen Ende des Durchganges (27) ein Ventilsitz (18) mit einem Ventilkegel (17) angeordnet ist, der in dem Körper (35) sich von einer Stellung, die den Ventilsitz (18) abdichtend schließt, in eine davon entfernte Stellung verschoben werden kann, wobei der Ventilkegel (17), wenn er in der geöffneten Stellung steht, einen Durchfluß zwischen dem Durchgang (27) und dem Auslaß (38) freigibt, und der Ventilkegel (17) einen Schaft (44) und einen Kopf (45) aufweist, der mit dem einen Ende des Schaftes (44) verbunden ist, und eine elektromagnetisch steuerbare Prallplatte (15) in dem Körper (35) montiert ist, die an dem Kopf (45) angreift, um den Schaft (44) hin und her zu bewegen, wobei die Hin- und Herbewegung bewirkt, daß der Ventilkegel (17) geschlossen und geöffnet wird, und die Prallplatte (15) als längliches Glied ausgebildet ist und eine längliche Achse aufweist, und die Prallplatte (15) um eine Achse (16) drehbar ist, die annähernd senkrecht in der Mitte der Prallplatte (15) angeordnet ist.

2. Modulierendes Regelventil nach Anspruch 1, dadurch gekennzeichnet, daß die Prallplatte (15) annähernd zylindrisch ausgebildet ist und eine Abflachung (32) aufweist, die in einer Ebene angeordnet ist, die parallel zu der drehbaren Achse (16) liegt, und am Kopf (45) des Ventilkegels (17) angreift.

3. Modulierendes Regelventil nach Anspruch 2, dadurch gekennzeichnet, daß der Kopf (45) konisch um eine Achse ausgebildet ist, die annähernd senkrecht zu der Abflachung (32) an der Prallplatte (15) steht, wobei der Ventilkegel (17) ein konisches Ventil (46) am anderen Ende des Schaftes (44) aufweist und der Ventilsitz (18) im wesentlichen aus einem runden messerartigen Rand besteht, an dem das konische Ventil (46) angreift.

4. Modulierendes Regelventil nach einem der Ansprüche 1 bis 3, dadurch gekennzeichnet, daß eine gewundene Druckfeder (19) zwischen dem Körper (35) und dem Kopf (45) angeordnet ist, um den Kopf (45) gegen die Abflachung (32) der Prallplatte (15) zu drücken.

1/3

FIG. I

FIG. 2

2/3

0109669

B. KEBEDE : 1-1

0109669

28'

29'

15'        27        **FIG. 4**

48

50        51

47        2'

49        39

30

15        31

32        45        17

44        46

**FIG. 3**

B. KEBEDE 1—

0109669

Nummer der Anmeldung

# EUROPÄISCHER RECHERCHENBERICHT

**Europäisches Patentamt**

EP 83 11 1529

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-B-2 131 857 (DANFOSS A/S) * Spalte 3, Zeile 9 - Spalte 4, Zeile 25; Figuren 1-2 * | 1,3 | F 16 K 31/06 F 15 B 13/044 |
| A | US-A-2 832 365 (P.A. SMITH) * Anspruch 1; Figuren 1-3 * | 1 | |
| A | US-A-4 268 009 (W. ALLEN) * Ganzes Dokument * | 1,3,4 | |
| A | FR-A-2 111 664 (J. LUCAS) | | |
| A | DE-B-1 226 843 (ELLIOTT BROTHERS) | | |
| A | US-A-2 844 158 (T.H. CARSON) | | |

| RECHERCHIERTE SACHGEBIETE (Int. Cl. 3) |
|---|
| F 16 K 31/00 F 15 B 13/00 |

Der vorliegende Recherchenbericht wurde für alle Patentansprüche erstellt.

| Recherchenort | Abschlußdatum der Recherche | Prüfer |
|---|---|---|
| BERLIN | 24-01-1984 | LEMBLE Y.A.F.M. |